# EUROPEAN PATENT APPLICATION

(11) **EP 4 715 603 A1**
(43) Date of publication of application: **25.03.2026**
(21) Application number: 25754601.0
(22) Date of filing: 10.02.2025
(51) Int. Cl.: G06F 11/3668, G06F 11/34, G06F 11/3698, G06N 3/08, G06N 3/0475, G06N 3/096

(54) **SYSTEM, METHOD, AND PROGRAM FOR CONSTRUCTING DATASET FOR EVALUATING USER INFORMATION PERSONALIZATION CAPABILITIES OF RETRIEVERS**

(30) Priority: 14.02.2024 KR 20240021059; 09.04.2024 KR 20240047745
(71) Applicant: LG Management Development Institute Co., Ltd., Seoul 07336 (KR)
(72) Inventor: OH, Hanseok, Seoul 04316 (KR)
(74) Representative: BCKIP Part mbB
(86) International application number: PCT/KR2025/001943
(87) International publication number: WO 2025/174014

(57) **Abstract**

A system, method, and program for constructing a dataset to evaluate user information personalization functionality of retrievers are disclosed. The method includes extracting a plurality of queries and a target corresponding to each of the plurality of queries from sample data, inputting a first prompt into an AI model to output an instruction set composed of a plurality of instructions including virtual user scenarios, additionally associating the instruction set with each of the corresponding plurality of queries and target to output as element data, inputting the element data together with a second prompt into the AI model to tune the target included in the element data to fit the virtual user scenario included in the plurality of instructions, and storing the plurality of tuned element data as a dataset.

## Description

### [Technical Field]

The present invention relates to a system, method, and program for constructing a dataset to evaluate user information personalization functionality of retrievers, and more specifically, the present invention relates to a system, method, and program for constructing a dataset to evaluate user information personalization functionality of retrievers using an AI model.

### [Background Art]

Large language models (LLMs) may receive additional training in the form of instruction tuning for various generation tasks to align with user's instructions and preferences {Ouyang, Long, et al. Training language models to follow instructions with human feedback. NeurIPS (2022)}.

In addition to LLMs, it is also desirable for information retrievers to be tuned based on user preferences to reflect user intent {Here, a retriever refers to a lightweight filter that searches a document repository to select a set of candidate documents related to a query, and may be a retriever system using a language model}. For example, when a user searches for documents related to a climate change issue with intent of writing a blog post for children, it is more helpful to retrieve articles that are easy to understand rather than complex scientific papers.

However, since most retrievers simply focus only on the user's query to output search results without reflecting user information (search intent, tendency, etc.), it is difficult to output search results that reflect the user intent. Therefore, there is also a lack of appropriate means to evaluate whether retrievers output search results that reflect user information.

As a prior art for evaluating whether a retriever outputs search results that reflect user information, BEIR (Thakur et al., 2021. Beir: A heterogeneous benchmark for zero-shot evaluation of information retrieval models) has been disclosed. However, since the BEIR benchmark evaluates retrievers by search task rather than evaluating the retrievers by user instance, it has limitations in that it is not appropriate for evaluating instruction-following functionality that indicates whether the search results through the retrievers reflect actual user intent. In addition, since the number of instances used for evaluation is too small, the BEIR benchmark is similarly not appropriate for evaluating the instruction-following functionality.
(Non-Patent Document 1) PlotQA: Reasoning over Scientific Plots, Nitesh Methani et al., 2020.
(Non-Patent Document 2) Thakur et al., 2021. Beir: A heterogeneous benchmark for zero-shot evaluation of information retrieval models

### [Disclosure]

### [Technical Problem]

The technical problem to be solved by the present invention is to provide a system, method, and program for constructing a dataset to evaluate user information personalization functionality of retrievers.

The technical problems to be solved by the present invention are not limited to the above-described objects, and other objects not mentioned herein will become more apparent to those skilled in the art from the following description.

### [Technical Solution]

A system for constructing a dataset for retrievers using a language model according to the present invention may include at least one processor; at least one server, and at least one memory storing commands or information that cause the at least one processor to perform operations, wherein the operations performed by the commands include extracting a plurality of queries and a target corresponding to each of the plurality of queries from sample data stored in the memory, inputting a first prompt stored in the memory into an AI model stored in the server to output an instruction set composed of a plurality of instructions including virtual user scenarios, additionally associating the instruction set with each of the corresponding plurality of queries and targets to output as element data, inputting the element data together with a second prompt into the AI model to tune the target included in the element data to fit the virtual user scenario included in the plurality of instructions, and storing the plurality of tuned element data as a dataset in the memory.

In the system, the first prompt may be a command that is input into the AI model to output the virtual user scenario including various information related to a user in a sentence.

In the system, the virtual user scenario may include information about background, location, occupation, hobby, interest, search goal, or preferred source regarding a virtual user.

In the system, the system may further include inputting the dataset together with a third prompt stored in the memory into the AI model to remove the element data that has obtained a score lower than a predetermined score from the dataset, wherein the third prompt may include a command configured to assign a score through the AI model according to whether the target matches the query and whether the target matches the plurality of instructions.

In the system, the tuning of the target to fit the virtual user scenario may further include inputting the element data together with the second prompt into the AI model to tune the target included in the element data to fit the query.

A method for constructing a dataset for retrievers using a language model according to the present invention may include extracting a plurality of queries and a target corresponding to each of the plurality of queries from sample data, inputting a first prompt into an AI model to output an instruction set composed of a plurality of instructions including virtual user scenarios, additionally associating the instruction set with each of the corresponding plurality of queries and target to output as element data, inputting the element data together with a second prompt into the AI model to tune the target included in the element data to fit the virtual user scenario included in the plurality of instructions, and storing the plurality of tuned element data as a dataset.

In the method, the first prompt may be a command that is input into the AI model to output the virtual user scenario including various information related to a user in a sentence.

In the method, the virtual user scenario may include information about background, location, occupation, hobby, interest, search goal, or preferred source regarding a virtual user.

In the method, the method may further include inputting the dataset together with a third prompt stored into the AI model to remove the element data that has obtained a score lower than a predetermined score from the dataset, wherein the third prompt may include a command configured to assign a score through the AI model according to whether the target matches the query and whether the target matches the plurality of instructions.

In the method, the tuning of the target to fit the virtual user scenario may further include
inputting the element data together with the second prompt into the AI model to tune the target included in the element data to fit the query.

A program according to another aspect of the present invention may be stored in a computer-readable recording medium to construct a dataset for retrievers using a language model according to embodiments of the present invention in conjunction with a computer.

### [Advantageous Effects]

According to the present invention, by constructing a large-scale dataset through securing a large amount of virtual user scenarios using an AI model, it is possible to derive a dataset that more accurately evaluates whether retrievers output search results reflecting user information.

In addition, according to the present invention, by improving consistency among data, it is possible to more accurately evaluate whether retrievers output search results reflecting user information.

The effects of the present invention are not limited to the above-described effects, and other effects not mentioned herein will be clearly understood by those skilled in the art from the following description.

### [Description of Drawings]

FIG. 1 is a schematic diagram of a system for implementing a method for constructing a dataset to evaluate user information personalization functionality of retrievers according to one embodiment of the present disclosure.
FIG. 2 is a block diagram for explaining a configuration of a device for constructing a dataset to evaluate user information personalization functionality of retrievers according to one embodiment of the present disclosure.
FIG. 3 is a block diagram for explaining a method for constructing a dataset to evaluate user information personalization functionality of retrievers according to embodiments of the present invention.
FIGS. 4 to 7 are examples of first to third prompt commands according to embodiments of the present invention.

### [Modes of the Invention]

The following embodiments are provided as examples so that the spirit of the present invention can be sufficiently conveyed to those skilled in the art to which the present invention pertains. Therefore, the present invention is not limited to the embodiments described below and may be specified in other forms.

The same reference numerals refer to the same components throughout the present invention. The present invention does not describe all elements of the embodiments, and common content in the art to which the present invention pertains or content that overlaps between the embodiments will be omitted. Terms such as "unit," "module," "member," and "block" used in the specification may be implemented as software or hardware, and according to the embodiments, a plurality of "units," "modules," "members," and "blocks" may be implemented as one component, or one "unit," "module," "member," and "block" may also include a plurality of components.

Throughout the specification, when a first component is described as being "connected" to a second component, this includes not only a case in which the first component is directly connected to the second component but also a case in which the first component is indirectly connected to the second component, and the indirect connection includes connection through a wireless communication network.

In addition, when a certain portion is described as "including" a certain component, it means further including other components rather than precluding other components unless specifically stated otherwise.

Throughout the present specification, when a first member is described as being positioned "on" a second member, this includes both a case in which the first member is in contact with the second member and a case in which a third member is present between the two members.

Terms such as first and second are used to distinguish one component from another, and the components are not limited by the above-described terms.

A singular expression includes plural expressions unless the context clearly dictates otherwise.

In each operation, identification symbols are used for convenience of explanation, and the identification symbols do not describe the sequence of each operation, and each operation may be performed in a different sequence from the specified sequence unless a specific sequence is clearly described in context.

A system for constructing a dataset to evaluate user information personalization functionality of retrievers according to the present invention may include a device, and the device may include all types of devices capable of performing computation processing and providing results to a user. For example, the system for constructing a dataset to evaluate user information personalization functionality of retrievers according to the present invention may include at least one of a computer, a server device, and a portable terminal, or may be implemented in any one form having the same or similar functions thereof. However, the present invention is not limited thereto.

Here, the computer may include, for example, a notebook, a desktop, a laptop, a tablet PC, a slate PC, etc., which are equipped with a web browser.

The server device is a server that processes information in communication with an external device, and may include an application server, a computing server, a database server, a file server, a game server, a mail server, a proxy server, and a web server.

The portable terminal is, for example, a wireless communication device ensuring portability and mobility and may include all kinds of handheld-based wireless communication devices such as a personal communication system (PCS), a global system for mobile communications (GSM), a personal digital cellular (PDC), a personal handyphone system (PHS), a personal digital assistant (PDA), international mobile telecommunication-2000 (IMT-2000), code division multiple access-2000 (CDMA-2000), w-code division multiple access (W-CDMA), a wireless broadband internet (WiBro) terminal, a smart phone, and wearable devices such as a watch, a ring, a bracelet, an anklet, a necklace, glasses, contact lenses, or a head-mounted device (HMD).

Hereinafter, embodiments of the present invention will be described in detail with reference to the accompanying drawings.

The present invention relates to a system, method, and program for constructing a dataset to evaluate user information personalization functionality of retrievers, and more specifically, the present invention relates to a system, method, and program for constructing a dataset to evaluate user information personalization functionality of retrievers using an AI model.

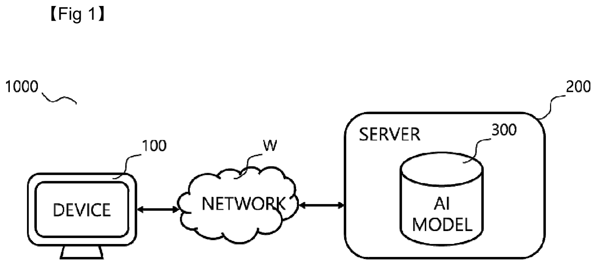

FIG. 1 is a schematic diagram of a system for constructing a dataset to evaluate user information personalization functionality of retrievers according to one embodiment of the present invention.

As shown in FIG. 1, a system 1000 may include a device 100 and a server 200, and the server 200 may include an AI model 300.

The device 100 and the server 200 included in the system 1000 may perform communication via a network W. Here, the network W may include a wired network and a wireless network. For example, the network may include various networks such as a local area network (LAN), a metropolitan area network (MAN), and a wide area network (WAN).

In addition, the network W may also include the well-known world wide web (WWW). However, the network W according to embodiments of the present invention is not limited to the above-listed networks and may include, at least in part, a well-known wireless data network, a well-known telephone network, or a well-known wired and wireless television network.

The device 100 may input a first prompt stored in a memory into the AI model stored in the server to output a plurality of instruction sets including a virtual user scenario. In addition, the device 100 may associate the plurality of output instruction sets with each of a plurality of queries to generate a plurality of targets, and store the plurality of targets as a dataset.

FIG. 1 shows a case in which the server 200 is implemented outside the device 100. In this case, the server 200 may be connected to the device 100 in a wired or wireless communication manner. However, this is only one embodiment, and the server 200 may also be implemented as one component of the device 100.

FIG. 1 shows a case in which the AI model 400 is implemented outside the device 100 (e.g., implemented in a cloud-based manner), but is not limited thereto, and may be implemented as one component of the device 100.

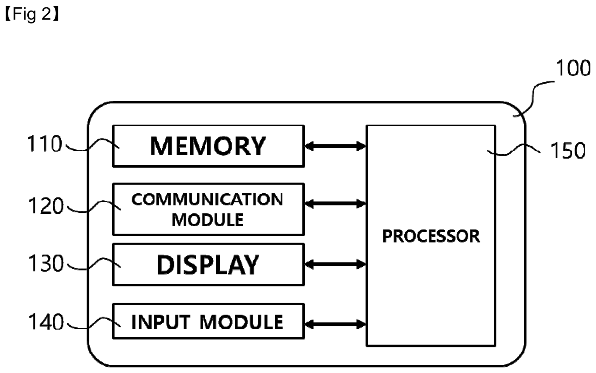

FIG. 2 is a block diagram for explaining a configuration of a device for constructing a dataset to evaluate user information personalization functionality of retrievers according to one embodiment of the present invention.

As shown in FIG. 2, the device 100 may include a memory 110, a communication module 120, a display 130, an input module 140, and a processor 150. However, the present invention is not limited thereto, and software and hardware components of the device 100 may be modified/added/omitted according to a required operation within a scope obvious to those skilled in the art. In addition, the device 100 may be replaced with a system, and the device 100 may include a plurality of devices, and in this case, each component included in the device 100 may be included in at least one of the plurality of devices.

The memory 110 may store data supporting various functions of the device 100 and a program for the operation of the processor 150, store input/output data, and store a plurality of application programs or applications that are driven on the present device, data, command, and the AI model for the operation of the device 100. At least some of the application programs may be downloaded from an external server via wireless communication.

Such memory 110 may include at least one type of storage medium among a flash memory type, a hard disk type, a solid state disk type (SSD type), a silicon disk drive type (SDD type), a multimedia card micro type, a card-type memory (e.g., an SD or XD memory), a random access memory (RAM), a static random access memory (SRAM), a read-only memory (ROM), an electrically erasable programmable ROM (EEPROM), a programmable ROM (PROM), a magnetic memory, a magnetic disk, and an optical disk.

In addition, the memory 110 may be separate from the device, and may include a database that is connected in a wired or wireless communication manner.

The communication module 120 may include one or more components that enable communication with an external device, and may include at least one of, for example, a broadcasting reception module, a wired communication module, a wireless communication module, a short-range communication module, or a position information module.

The wired communication module may include not only various wired communication modules such as a local area network (LAN) module, a wide area network (WAN) module, and a value added network (VAN) module, but also various cable communication modules such as a universal serial bus (USB), a high definition multimedia interface (HDMI), a digital visual interface (DVI), a recommended standard 232 (RS-232), power line communication, and plain old telephone service (POTS).

In addition to the WiFi module and the wireless broadband (WiBro) module, the wireless communication module may include a wireless communication module for supporting various wireless communication methods such as global system for mobile communication (GSM), code division multiple access (CDMA), wideband CDMA (WCDMA), universal mobile telecommunications system (UMTS), time division multiple access (TDMA), long term evolution (LTE), 4G, 5G, or 6G.

The display 130 displays (outputs) information or data that are processed in the device 100, data that are input or output through the AI model 400, etc. In addition, the display 130 may display execution screen information of an application program (e.g., an application) driven on the device 100, or user interface (UI) or graphic user interface (GUI) information according to such execution screen information.

The input module 140 is for receiving information from a user, and when the user inputs information through an input unit, the processor 150 may control the operation of the device 100 to correspond to the input information.

The input module 140 may include a hardware physical key (e.g., a button located on at least one of a front surface, a back surface, and a side surface of the device, a dome switch, a jog wheel, a jog switch, etc.) and a software touch key. As an example, the touch key may be formed as a virtual key, a soft key, or a visual key that is displayed on a touchscreen type of the display 130 through software processing or may be formed as the touch key disposed in a portion other than the touchscreen. Meanwhile, the virtual key or visual key may have various forms and may be displayed on the touchscreen, and may be formed as, for example, a graphic, text, an icon, a video, or a combination thereof.

The processor 150 may be implemented with a memory that stores data for an algorithm for controlling the operations (including training or execution of the AI model) of the components in the device 100 or a program that reproduces the algorithm, and at least one processor (not shown) that performs the above-described operation using the data stored in the memory. In this case, the memory and the processor may each be implemented as separate chips or may be implemented as a single chip.

In one embodiment, the system 1000 or the device 100 according to the present invention may include at least one processor, and when including a plurality of processors, the plurality of processors may be included in different devices 100.

In addition, the processor 150 may control the operations of the components by combining any one or a plurality of the above-described components in order to implement various embodiments according to the present disclosure, which will be described below, on the device 100.

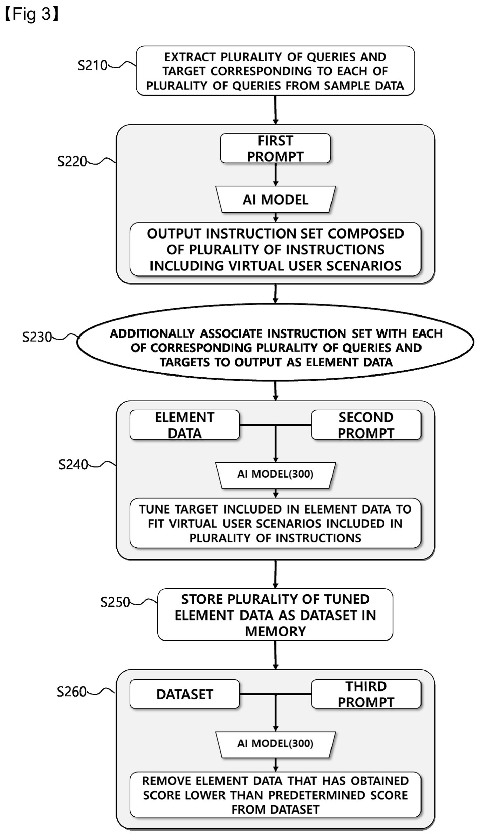

FIG. 3 is a block diagram for explaining a method for constructing a dataset to evaluate user information personalization functionality of retrievers according to an embodiment of the present invention.

Referring to FIG. 3, a plurality of queries and a target corresponding to each of the plurality of queries are extracted from sample data (S210). One target may correspond to each query, or a plurality of targets may correspond to each query. The sample data may be stored in the memory 110 of the device 100. The sample data may be configured to include the query, the target, and/or an instruction. The sample data may be already known data or data arbitrarily created by a user, but is not limited thereto.

The query refers to a character string that enables a user to retrieve information by inputting it into a retriever. For example, the query may be in the form of a question such as "What about bloating-related abdominal pain?", but is not limited thereto.

The target refers to a result obtained by inputting the query into the retriever and the degree of relevance may vary depending on the case. For example, when a query "What about bloating-related abdominal pain?" is input, a target regarding a professional opinion may be output such as "The subject reports significant abdominal discomfort consistent with bloating related to abdominal distension. In particular, a patient experiences audible gas sounds ('popping'), which temporarily relieves the pain. This symptom may indicate temporary symptom relief due to intra-abdominal pressure. To fully characterize the experience that is helpful for clinical evaluation and treatment planning, additional diagnostic details such as pain scale ratings and comparative analysis with other abdominal disorders are required. Recent studies emphasize the importance of distinguishing such pain profiles for accurate diagnosis." and on the other hand, a target regarding a personal opinion may be output such as

"In today's post, I want to talk about the discomfort I experienced due to my abdominal bloating, which was quite painful. Interestingly, I sometimes felt a 'popping' sensation, and strangely, there were periods when the pressure was relieved shortly after. I am trying natural remedies and lifestyle changes to alleviate this abdominal bloating. I plan to share my experiences with these methods and their results, so please stay tuned."

The query extracted from the sample data is referred to as a seed query, and it is desirable that the seed query can be matched to various targets as the instruction is developed through tuning or filtering performed according to the subsequent operations. In addition, since the purpose of the seed query may become ambiguous as its length increases, it is desirable that the seed query is composed of text between 255 and 371 characters, but is not limited thereto.

Next, a first prompt is input into an AI model to output an instruction set composed of a plurality of instructions that are virtual user scenarios (S220).

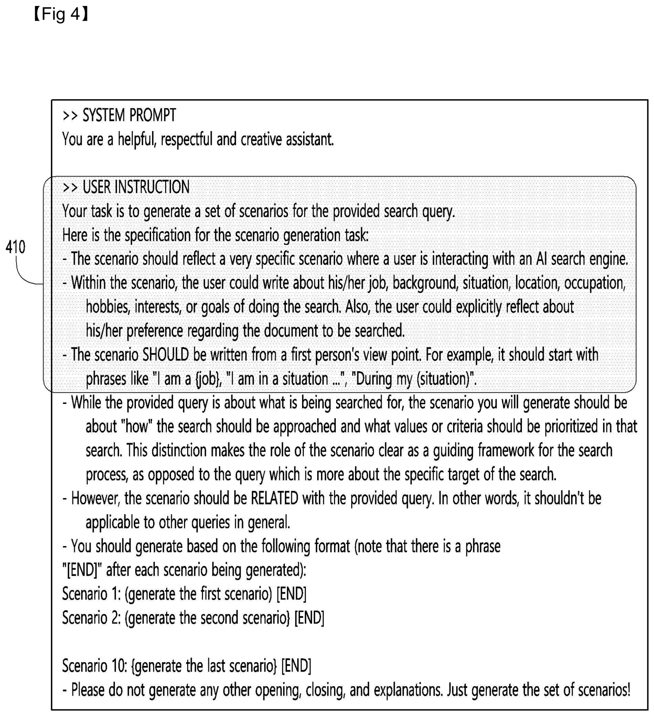

The first prompt may be stored in the memory 110 of the device 100. The first prompt, as shown in FIG. 4, refers to a command that is input into the AI model to output the virtual user scenario including various information related to a user (e.g., occupation, search context, search location, search goal, preferred source, etc.) in a sentence. For example, a command of the first prompt may be configured so that a sentence output when the first prompt is input into the AI model may include "My job is {A}", "I am in a situation called {B}", or "I am doing {C}", and more specifically, the command of the first prompt may be configured as in a command 410, "Your task is to generate a set of scenarios for the provided search query. Here is the specification for the scenario generation task: The scenario should reflect a very specific scenario where a user is interacting with an AI search engine. Within the scenario, the user could write about his/her job, background, situation, location, occupation, hobbies, interests, or goals of doing the search. Also, the user could explicitly reflect about his/her preference regarding the document to be searched. The scenario should be written from a first person's view point. For example, it should start with phrases like "I am a {job}", "I am in a situation...", "During my (situation)"."

The plurality of instructions output through the first prompt may include a virtual user scenario seeking expertise in a specific field, such as "As a medical professional specializing in gastrointestinal disorders, I have noticed an increase in patients complaining of abdominal discomfort. To provide better consultation, I am searching for medical papers or patient reviews that can specifically describe pain related to abdominal bloating and distinguish it from other types of abdominal pain. I would like to prioritize finding recent medical studies or articles including symptoms, patient experiences, and pain scale ratings that are related to abdominal bloating.", or may include a virtual user scenario seeking a personal opinion such as "While suffering from digestive health issues, I am looking for home remedies and lifestyle changes that can alleviate abdominal bloating and the resulting pain. I am particularly interested in personal blogs or holistic health forums that discuss the physical sensations of bloating and provide reviews on the effectiveness of various treatments."

Next, the instruction set is additionally associated with each of the corresponding plurality of queries and targets to output as element data (S230).

For example, one target corresponds to one query, and one instruction set composed of a plurality of instructions is additionally associated therewith. In this case, in the subsequent operation of tuning the element data, as one target may be tuned to fit the virtual user scenarios included in the plurality of instructions, one target may be modified into a plurality of targets corresponding to each of the plurality of instructions. However, the present invention is not limited thereto, and for example, a plurality of targets may correspond to one query, and one instruction set composed of a plurality of instructions may be associated therewith.

Next, the element data together with a second prompt is input into the AI model to tune the target included in the element data to fit the virtual user scenarios included in the plurality of instructions (S240).

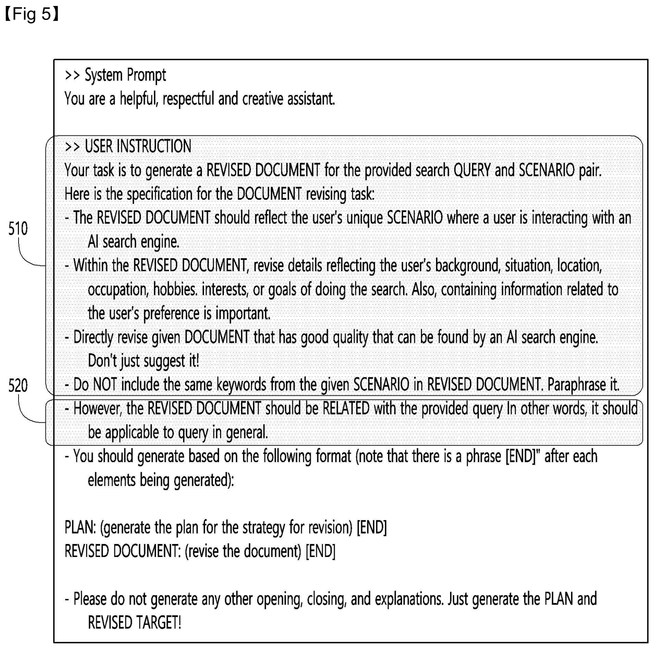

Here, the second prompt may be stored in the memory 110 of the device 100. The second prompt, as shown in FIG. 5, refers to a command that tunes the target input into the AI model to fit the virtual user scenario of the instruction set. For example, a command of the second prompt may include, as in command 510, a command such as "user instruction: Your task is to generate a revised document for the provided search query and scenario pair. Here is the specification for the document revising task: The revised document should reflect the user's unique scenario where a user is interacting with an AI search engine. Within the revised document, revise details reflecting the user's background, situation, location, occupation, hobbies, interests, or goals of doing the search. Also, containing information related to the user's preference is important. Directly revise given document that has good quality that can be found by an AI search engine. Don't just suggest it! Do not include the same keywords from the given scenario in revised document. Paraphrase it."

For example, it can be assumed that the target before tuning was "According to recent academic discussions and clinical studies, abdominal bloating that causes discomfort due to abdominal distension has been found to be related to specific dietary choices. Gastrointestinal distension, commonly described as 'bloating,' may cause temporary abdominal pain, which is sometimes relieved through excessive gas release. This experience has been demonstrated through empirical studies that have found that specific foods, such as those high in fermentable oligosaccharides, disaccharides, monosaccharides, and polyols (FODMAPs), are factors that induce abdominal bloating and the resulting temporary pain." and that the virtual user scenario was related to a user seeking a personal opinion. In this case, when the element data together with the second prompt is input into the AI model, the content of the target may be tuned to fit a user seeking a personal opinion, such as "While suffering from digestive health issues, I am looking for home remedies and lifestyle changes that can alleviate abdominal bloating and the resulting pain. I am particularly interested in personal blogs or holistic health forums that discuss the physical sensations of bloating and provide reviews on the effectiveness of various treatments."

Therefore, according to the present invention, by constructing a large-scale dataset through securing a large amount of virtual user scenarios using an AI model, it is possible to derive a dataset that more accurately evaluates whether retrievers output search results reflecting user information. In addition, according to the present invention, it is possible to evaluate more accurately whether a retriever outputs search results reflecting user information by improving consistency between target information included in the dataset and the corresponding virtual user scenarios.

Next, the plurality of tuned element data is stored as a dataset in the memory (S250).

Next, the dataset together with a third prompt is input into the AI model to remove the element data that has obtained a score lower than a predetermined score from the dataset (S260).

Here, the third prompt may include a command configured to assign a score through the AI model according to whether the target matches the query and whether the target matches the instruction, and preferably include a command to output an explanation therefor along with the score.

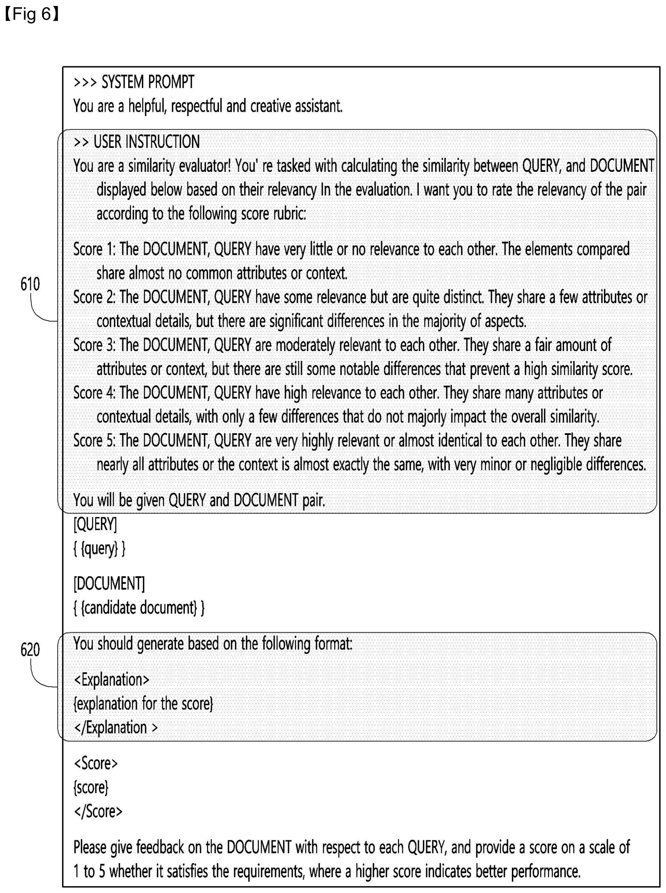

More specifically, as shown in FIG. 6, the third prompt may be configured as a command that assigns a score based on whether the target matches the query. For example, the command may be configured to assign 1 point when the target and query appear to have very little or no relevance to each other, 2 points when the target and query appear to have some relevance but are quite distinct, 3 points when the target and query appear to be moderately relevant to each other, 4 points when the target and query appear to be highly relevance to each other, and 5 points when the target and query appear to be very highly relevant or almost identical to each other. More specifically, the third prompt may include, as in command 610, a command such as "User instruction: You are a similarity evaluator! You're tasked with calculating the similarity between query, and document displayed below based on their relevancy. In the evaluation, I want you to rate the relevancy of the pair according to the following score rubric: Score 1: The document, query have very little or no relevance to each other. The elements compared share almost no common attributes or context. Score 2: The document, query have some relevance but are quite distinct. They share a few attributes or contextual details, but there are significant differences in the majority of aspects. Score 3: The document, query are moderately relevant to each other. They share a fair amount of attributes or context, but there are still some notable differences that prevent a high similarity score. Score 4: The document, query have high relevance to each other. They share many attributes or contextual details, with only a few differences that do not majorly impact the overall similarity. Score 5: The document, query are very highly relevant or almost identical to each other. They share nearly all attributes or the context is almost exactly the same, with very minor or negligible differences. You will be given query and document pair.

In addition, the third prompt may include, as in command 620, to output a score along with an explanation thereof, a command such as "You should generate based on the following format: <explanation> {explanation for the score} </explanation> <score> {score} </score>".

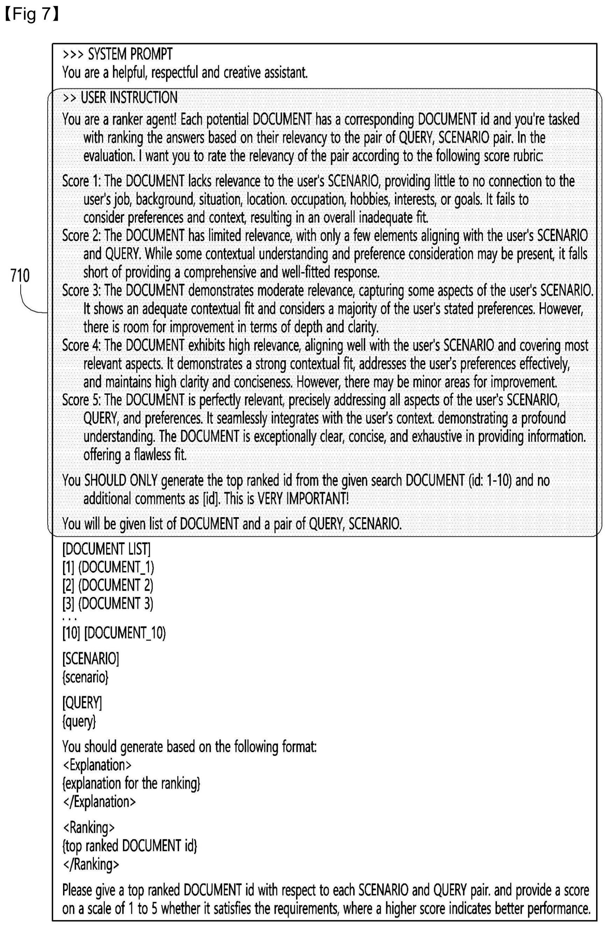

In addition, as shown in FIG. 7, the third prompt may be configured as a command that assigns a score based on whether the target matches the instruction (i.e., the virtual user scenario). For example, the command may be configured to assign 1 point when the target and the virtual user scenario lack relevance and show no connection, 2 points when the target and the virtual user scenario have limited relevance, 3 points when the target and the virtual user scenario demonstrate moderate relevance, 4 points when the target and the virtual user scenario exhibit high relevance, and 5 points when the target is perfectly relevant to precisely address all aspects of the virtual user scenario. More specifically, the third prompt may include, as in command 710, a command such as "User instruction: You are a ranker agent! Each potential document has a corresponding document id and you're tasked with ranking the answers based on their relevancy to the pair of query, scenario pair. In the evaluation, I want you to rate the relevancy of the pair according to the following score rubric: Score 1: The document lacks relevance to the user's scenario, providing little to no connection to the user's job, background, situation, location, occupation, hobbies, interests, or goals. It fails to consider preferences and context, resulting in an overall inadequate fit. Score 2: The document has limited relevance, with only a few elements aligning with the user's scenario and query. While some contextual understanding and preference consideration may be present, it fails short of providing a comprehensive and well-fitted response. Score 3: The document demonstrates moderate relevance, capturing some aspects of the user's scenario. It shows an adequate contextual fit and considers a majority of the user's stated preferences. However, there is room for improvement in terms of depth and clarity. Score 4: The document exhibits high relevance. aligning well with the user's scenario and covering most relevant aspects. It demonstrates a strong contextual fit, addresses the user's preferences effectively, and maintains high clarity and conciseness. However, there may be minor areas for improvement. Score 5: The document is perfectly relevant, precisely addressing all aspects of the user's scenario, query, and preferences. It seamlessly integrates with the user's context, demonstrating a profound understanding. The document is exceptionally clear, concise, and exhaustive in providing information, offering a flawless fit. You should only generate the top ranked id from the given search document (id: 1-10) and no additional comments as [id]. This is very important! You will be given list of document and a pair of query, scenario."

Therefore, according to the present invention, by improving consistency among data, it is possible to more accurately evaluate whether retrievers output search results reflecting user information.

In another embodiment, in inputting the element data together with the second prompt into the AI model to tune the target included in the element data to fit the virtual user scenarios included in the plurality of instructions, tuning the target included in the element data to fit the query may be further included. For example, to tune the target to fit the query, a command of the second prompt may include, as in command 520 of FIG. 5, a command such as "However, the revised document should be related with the provided query. In other words, it should be applicable to query in general."

Therefore, according to the present invention, it is possible to evaluate more accurately whether the retriever outputs search results reflecting user information by improving consistency between the target information included in the dataset and the corresponding queries.

Meanwhile, the method for constructing the dataset to evaluate user information personalization functionality of retrievers according to embodiments of the present invention may be implemented by the system described with reference to FIG. 1.

The AI models according to embodiments of the present invention may be controlled, executed, trained, driven, etc. by the processor, and accordingly, at least one of the tasks of executing, training, and driving the AI models may be performed by at least one processor. In addition, the AI models may be stored in the memory, and the feature data according to the present invention may also be stored in the memory.

Meanwhile, disclosed embodiments may be implemented in the form of a recording medium in which computer-executable commands are stored. The commands may be stored in the form of program code, and when executed by the processor, program modules may be generated to perform operations of the disclosed embodiments. The recording medium may be implemented as a computer-readable recording medium.

The computer-readable recording medium includes all types of recording media in which computer-decodable commands are stored. For example, there may be a read only memory (ROM), a random access memory (RAM), a magnetic tape, a magnetic disk, a flash memory, an optical data storage device, and the like.

As described above, the disclosed embodiments have been described with reference to the accompanying drawings. Those skilled in the art to which the present disclosure pertains will understand that the present disclosure may be implemented in different forms from the disclosed embodiments without departing from the technical spirit or essential features of the present disclosure. The disclosed embodiments are illustrative and should not be construed as being limited.

## Claims

1. A system for constructing a dataset for retrievers using a language model, comprising:
at least one processor;
at least one server; and
at least one memory storing commands or information that cause the at least one processor to perform operations,
wherein the operations performed by the commands include:
extracting a plurality of queries and a target corresponding to each of the plurality of queries from sample data stored in the memory;
inputting a first prompt stored in the memory into an AI model stored in the server to output an instruction set composed of a plurality of instructions including virtual user scenarios;
additionally associating the instruction set with each of the corresponding plurality of queries and targets to output as element data;
inputting the element data together with a second prompt into the AI model to tune the target included in the element data to fit the virtual user scenario included in the plurality of instructions; and
storing the plurality of tuned element data as a dataset in the memory.

2. The system of claim 1, wherein the first prompt is a command that is input into the AI model to output the virtual user scenario including various information related to a user in a sentence.

3. The system of claim 1, wherein the virtual user scenario includes information about background, location, occupation, hobby, interest, search goal, or preferred source regarding a virtual user.

4. The system of claim 1, further comprising
inputting the dataset together with a third prompt stored in the memory into the AI model to remove the element data that has obtained a score lower than a predetermined score from the dataset,
wherein the third prompt includes a command configured to assign a score through the AI model according to whether the target matches the query and whether the target matches the plurality of instructions.

5. The system of claim 1, wherein the tuning of the target to fit the virtual user scenario further includes inputting the element data together with the second prompt into the AI model to tune the target included in the element data to fit the query.

6. A method for constructing a dataset for retrievers using a language model, comprising:
extracting a plurality of queries and a target corresponding to each of the plurality of queries from sample data;
inputting a first prompt into an AI model to output an instruction set composed of a plurality of instructions including virtual user scenarios;
additionally associating the instruction set with each of the corresponding plurality of queries and targets to output as element data;
inputting the element data together with a second prompt into the AI model to tune the target included in the element data to fit the virtual user scenario included in the plurality of instructions; and
storing the plurality of tuned element data as a dataset.

7. The method of claim 6, wherein the first prompt is a command that is input into the AI model to output the virtual user scenario including various information related to a user in a sentence.

8. The method of claim 6, wherein the virtual user scenario includes information about background, location, occupation, hobby, interest, search goal, or preferred source regarding a virtual user.

9. The method of claim 6, further comprising
inputting the dataset together with a third prompt stored into the AI model to remove the element data that has obtained a score lower than a predetermined score from the dataset,
wherein the third prompt includes a command configured to assign a score through the AI model according to whether the target matches the query and whether the target matches the plurality of instructions.

10. The method of claim 6, wherein the tuning of the target to fit the virtual user scenario further includes inputting the element data together with the second prompt into the AI model to tune the target included in the element data to fit the query.

11. A program stored in a computer-readable recording medium to execute the method of any one of claims 6 to 10 in conjunction with a computer.
